Europäisches Patentamt

European Patent Office

Office européen des brevets

(11) Publication number: **0 285 072**
**B1**

(12) **EUROPEAN PATENT SPECIFICATION**

(45) Date of publication of patent specification: **09.01.91**

(51) Int. Cl.⁵: **F 16 G 1/08**

(21) Application number: **88104997.7**

(22) Date of filing: **28.03.88**

(54) Transmission belt.

(30) Priority: **01.04.87 IT 4571387**

(43) Date of publication of application:
**05.10.88 Bulletin 88/40**

(45) Publication of the grant of the patent:
**09.01.91 Bulletin 91/02**

(84) Designated Contracting States:
**AT BE CH DE ES FR GB IT LI NL SE**

(56) References cited:
**EP-A-0 034 378**
**DE-U-8 023 719**
**FR-A-1 115 304**
**US-A-3 108 484**

**PATENT ABSTRACTS OF JAPAN, vol.5, no. 133**
**(M-97)855r, 21st November 1986; & JP-A-56 105**
**135 (MITSUBOSHI BELT K.K.) 21-08-1981**

**PATENT ABSTRACTS OF JAPAN, vol. 10, no.**
**375 (M-545)2432r, 13th December 1986; &**
**JP-A-61 167 736 (BANDO CHEM. IND. LTD.)**
**29-07-1986**

(73) Proprietor: **INDUSTRIE ZANUSSI S.p.A.**
**Via Giardini Cattaneo 3**
**I-33170 Pordenone (IT)**

(72) Inventor: **Tadolini, Marco**
**Via G. Casalis 10**
**I-10143 Torino (IT)**

(74) Representative: **Patentanwälte Grünecker,**
**Kinkeldey, Stockmair & Partner**
**Maximilianstrasse 58**
**D-8000 München 22 (DE)**

Courier Press, Leamington Spa, England.

## Description

The present invention relates to a transmission belt of the type referred to in the introductory part of claim 1.

JP-A-56-105135 describes a belt of the above-mentioned type which includes a number of cords embedded in the belt body in longitudinal direction. The cord is of aramide fiber which has a twist coefficient of 3—9 and is heat treated under the tension of 1.0—6—0g/b.

Transmission belts may be of non-expansible or elastically expansible types. The belts of non-expansible type (DE-U-80 23 719) have dimensions permitting them to transmit substantial forces, with the capability of adapting themselves to driving pulleys of reduced diameter to thereby achieve a considerable reduction of the rotary speed between the driving pulley and the corresponding driven pulley of greater diameter associated to the drum of the respective machine. These transmission belts are employed for interconnecting pulleys of fixed diameters at a fixed transmission ratio, the rotary speed of the drum being variable in this case by carrying the rotary speed of the motor, or by the use of conventional converter mechanisms associated to the motor. Although belts of the type described are satisfactory and reliable in operation, they still present some inconveniences. In view of the fact, in the first place, that these belts are not expansible, the operation of mounting them requires the distance between the axes of the driving pulley and the driven pulley to be initially shortened for permitting the belt to be guided onto the pulleys, and to be subsequently increased for imparting sufficient tension to the belt for satisfactory transmission of the driving force.

To this purpose the motor and its associated pulley are usually mounted in an adjustable manner with the aid of conventional mounting systems adjacent the lower portion of the tub-and-drum assembly of the respective machine, permitting them to be displaced between predetermined limits to thereby adjust the distance between them and the tub-and-drum assembly, with the resultant adjustment of the distance between the axes of the respective pulleys.

The operation of mounting a belt of this type is thus rather onerous and requires the accurate adjustment of the belt tension. In addition, the construction of such appliances provided with a transmission belt of this type is considerably complicated by the presence of the above-mentioned mounting system required for the adjustment of the motor and its driving pulley. A further disadvantage of this transmission belt which results from its non-expansibility which prevents the belt from adapting its length to even the slightest variations of the distance between the axes of the driving and driven pulleys as may be brought about during operation of the machine by different thermal expansion coefficients of the tub-and-drum assembly and the motor with its driving pulley. If in this case the distance between the axes of the pulleys increases, while the length of the belt is invariable, the belt is still capable of transmitting the driving force between the pulleys, subjecting the bearings associated to the pulleys to considerable mechanical stress which is detrimental to their durability. Under these conditions the belt additionally acts to transmit vibrations generated by the motor to the tub-and-drum assembly and even to the housing of the appliance, resulting in a noisy operation of the machine. A known transmission belt (US-A-31 08 484) is made of an elastomeric material, for instance natural and/or synthetic rubber or a polyurethane elastomer, and advantageously having a circular cross-sectional shape. The length of such belts is considerably extensible in use (up to about 28% of the relaxed length) without incurring permanent deformation. These belts are advantageously employed for interconnecting variable-diameter pulleys of conventional speed variator transmissions, for instance flyweight-controlled pulleys the diameter of which varies in accordance with their rotary speed. Pulleys of this type are used particularly in laundry washers and laundry dryers for transmitting the driving force of the motor to the drum of the machine at variable transmission ratios.

As in the case of the multiple-V belts referred to above these belts are likewise capable of transmitting relatively great driving forces, but in contrast thereto they can be mounted and tensioned on the driving and driven pulleys of the appliance without requiring the distance between the axes of the pulleys to be changed, thanks to the fact that these belts are elastically expansible and therefore capable of adapting themselves to pulleys of different diameters.

As a result, the operation of mounting this belt is considerably simplified and results in the automatic tensioning of the belt, thus permitting the mounting system formerly required for adjustably mounting the motor and its associated driving pulley adjacent the lower portion of the tub-and-drum assembly of the appliance to be eliminated to thereby simplify the overall construction of the machine. Thanks to its elastic characteristics, the belt under discussion is also capable of adapting itself to possible variations of the distance between the axes of the driving and driven pulleys due to different thermal expansion of the various components of the machine to thereby ensure reliable transmission of the driving force without subjecting the bearings associated to the pulleys to excessive mechanical stress, and without excessive noise in operation of the machine.

Although these transmission belts are functionally satisfactory and reliable in operation, they still suffer from the shortcoming of not being capable of efficiently transmitting a driving force from a driving pulley of reduced diameter as employed in present-day laundry washers and laundry dryers to obtain a high degree of speed reduction. This is due to the incapability of these belts of snugly adapting themselves to the V-groove of such pulleys.

It is the object of the present invention to overcome the above noted inconveniences and shortcomings by the provision of a transmission belt for use particularly in laundry washers, laundry dryers and laundry washer-dryer combinations, for efficiently transmitting the rotary driving force from the motor to the drum of such machines. This aim is achieved by a transmission belt as claimed in claim 1.

According to the invention, the belt is of the elastic type in the form of an endless loop having elastic characteristics permitting it to be mounted on fixed-diameter pulleys even of a substantially small diameter without requiring the distance between the axes of the pulleys to be changed, and in such a manner that the belt is always in correct engagement with the pulleys, and also permitting the belt to automatically adapt itself to possible variations of the distance between the axes of the pulleys caused by different thermal expansion of the various components during operation of the machine.

The characteristics of the invention will become more clearly evident from the following description, given by way of example with reference to the accompanying drawings, wherein:

fig. 1 shows a cross-sectional view of a transmission belt according to the invention, and

fig. 2 shows a longitudinal sectional view of a portion of the present transmission belt, taken along the line A—A in fig. 1.

The transmission belt according to the invention is substantially of the elastically expansible type in the form of an endless loop, and is used for transmit rotation between different mechanical components. The present belt is particularly intended for use in laundry washers, laundry dryers and laundry washer-dryer combinations, in which it operatively interconnects a fixed-diameter driving pulley and a fixed-diameter driven pulley (not shown) associated respectively to the motor and the rotary drum of the respective machine (likewise not shown) for rotating the drum at a selected speed. The belt is made of an elastomeric material such as vulcanized natural or synthetic rubber, a polyurethane elastomer or the like, and has a cross-sectional shape substantially corresponding to that of a conventional multiple-V belt of the non-expansible type.

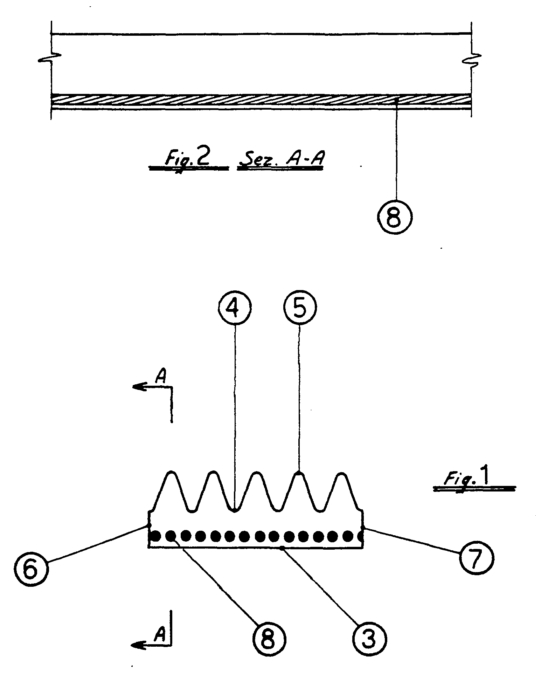

As shown in fig. 1, the cross-sectional shape of the belt is defined by a preferably planar outer circumferential surface 3 and opposite thereto an inner circumferential surface comprising a plurality of grooves 4 and ribs 5 of triangular or trapezoidal cross-sectional shape extending side by side and adapted to engage correspondingly shaped driving and driven pulleys of a machine of the type defined above, and by a pair of planar lateral surfaces 6 and 7 extending parallel to one another.

The described transmission belt is further provided with a plurality of reinforcing strands 8 embedded in the material of the belt and disposed side by side in the transverse direction adjacent the outer circumferential surface 3 of the belt, said strands 8 extending in the longitudinal direction of the belt.

Each reinforcing strand 8 is composed of a plurality of synthetic textile fibres, preferably polyamide fibres, which are non-prestretched and are characterized by a high elongation at rupture, with a value of at least 18% or above.

These textile fibres are bundled and stranded by means of a conventional device, so that there are at least 300 turns per longitudinal meter of the fibres. The strands are subsequently placed in a die for the formation of the belt, so that the subsequent introduction of the material of the belt results in their being embedded in the material.

Fig. 2 shows a longitudinal sectional view of a section of the belt, in which one of the reinforcing strands 8 is exposed for demonstrating its stranded configuration.

Thanks to the highly elastic nature of the reinforcing strands, the transmission belt of the above described structure has an elongation at rupture of more than 15% in the longitudinal direction. This characteristic permits an elastic elongation of the belt within predetermined limits, generally of a magnitude of several millimeters. This is less than the elastic elongation of known elastic belts of the expansible type, to thereby ensure the correct and constant tensioning of the present transmission belt about the respective pulleys.

The present elastic belt can be mounted rapidly and with minimum effort, its elastic elongation permitting it to be guided onto the respective pulleys without requiring the distance between the axes of the pulleys to be changed.

As a result, the construction of the respective machine may be considerably simplified, and it is even possible to mount the belt and/or the respective pulleys in a fully automatized operation.

As the belt is thus being mounted, its elastic nature permits a proper tensioning to be automatically obtained, so that no further operations are required for this purpose.

This elastic nature also ensures an efficient and automatic adaptation to possible variations of the distance between the axes of the driving and driven pulleys caused by thermal expansion of the pulleys themselves and of the tub-and-drum assembly of the machine, thus permitting the driving force to be transmitted without the transmission of excessive stresses to the bearings carrying the pulleys.

By the same token, as the present belt is capable of functioning efficiently even when the distance between the pulley axes varies, it does not transmit vibrations generated by the motor to the tub-and-drum assembly and to the housing of the machine, so that a reliable and completely silent operation is obtained by the employ of the belt.

Within the scope of the invention, the belt may of course be used for machines other than those described to thereby achieve the advantages specified above.

Thanks finally to the presence of the grooves 4 and ribs 5, the belt is capable of properly engaging even pulleys of a reduced diameter with considerable adherence thereto, thus permitting a strong driving force to be transmitted at increased transmission ratios.

## Claim

A transmission belt for use particularly in laundry washers, laundry dryers and laundry washer-dryer combinations, for transmitting rotation between at least one driving pulley and a driven pulley of the respective machine, said belt being of the elastically expansible type in the form of an endless loop composed of an elastomeric material such as vulcanized natural or synthetic rubber, a polyurethane elastomer or the like, and provided with a plurality of reinforcing strands (8) composed of a plurality of synthetic textile fibers, preferably polymide fibers, which are embedded in the material of the belt and disposed side by side in the transverse direction of the belt adjacent the outer circumferential surface (3) thereof, said belt being further provided with a plurality of grooves (4) and ribs (5) of trapezoidal or triangular cross-sectional shape disposed side by side on the surface of said belt opposite to said outer circumferential surface (3) for engagement with correspondingly shaped driving and driven pulleys,
characterized in that
each of said reinforcing strands (8) has a high elongation at rupture with a value of at least 18% or above, and in that the textile fibers of each strand (8) are not pre-stretched and stranded with a minimum of 300 turns per longitudinal meter of the same fibers.

## Patentanspruch

Transmissionsriemen zur Verwendung speziell in Waschmaschinen, Wäschetrocknern und Wäschewaschtrocknerkombinationen zur Übertragung von Drehung zwischen wenigstens einer Antriebsriemenscheibe und einer Abtriebsriemenscheibe der betreffenden Maschine, wobei der Riemen vom elastisch dehnbaren Typ in Form einer endlosen Schleife ist, die aus einem elastomeren Material, wie beispielsweise vulkanisiertem Naturoder synthetischem Kautschuk, einem Polyurethan-Elastomer oder dgl. besteht und mit einer Vielzahl von Verstärkungslitzen (8) versehen ist, die aus einer Vielzahl von synthetischen Textilfasern, vorzugsweise Polyamidfasern bestehen, die in das Material des Riemens eingebettet sind und nebeneinander in Querrichtung des Riemens benachbart der äußeren Umfangsfläche (3) desselben angeordnet sind, wobei der Riemen weiterhin mit einer Vielzahl von Nuten (4) und Rippen (5) von trapezförmigem oder dreieckigem Querschnitt versehen ist, die nebeneinander an der der äußeren Umfangsfläche (3) entgegengesetzten Fläche des Riemens zum Eingriff mit entsprechend gestalteten Antriebs- und Abtriebsriemenscheiben versehen ist, dadurch gekennzeichnet, daß jede der Verstärkungslitzen (8) eine hohe Bruchdehnung mit einem Wert von wenigstens 18% oder darüber aufweist, und daß die Textilfasern einer jeden Litze (8) nicht vorgedehnt sind und mit wenigstens 300 Windungen pro Längenmeter der Fasern verseilt sind.

## Revendication

Courroie de transmission utilisée, en particulier dans les sèche-linge, les lave-linge et les lave-linge-sèche-linge combinés, pour transmettre une rotation entre au moins une poulie d'entraînement et une poulie entraînée de la machine respective, cette courroie étant du type élastiquement extensible sous la forme d'une boucle sans fin constituée d'une matière élastomère, par exemple du caoutchouc naturel ou synthétique vulcanisé, un élastomère polyuréthane ou l'analogue, et comportant une multiplicité de torons de renforcement (B) constitués par une multiplicité de fibres textiles synthétiques, de préférence des fibres polyamide, qui sont noyés dans la matière de la courroie et sont disposés côte à côte dans le sens transversal de la courroie et adjacents à la surface circonférentielle extérieure (3) de celle-ci, cette courroie comportant en outre une multiplicité de gorges (4) et de nervures (5) de section transversale triangulaire ou trapézoidale disposées côte à côte sur la surface de cette courroie opposée à la surface circonférentielle extérieure (3) pour coopérer avec des poulies d'entraînement et entraînées de forme correspondante, caractérisée en ce que
chaque toron de renforcement (8) a un coefficient d'allongement à rupture élevé, d'au moins 18%, et en ce que les fibres textiles de chaque toron (8) ne sont pas pré-étirées et sont toronnées avec un minimum de 300 tours par mètre longitudinal de ces fibres.

Fig.2   Sez. A-A

Fig.1

1